(19)

**Europäisches Patentamt**

**European Patent Office**

**Office européen des brevets**

(11) **EP 2 672 293 A2**

(12) **EUROPEAN PATENT APPLICATION**

(43) Date of publication:
**11.12.2013 Bulletin 2013/50**

(51) Int Cl.:
***G01V 1/42*** (2006.01)

(21) Application number: **13169788.0**

(22) Date of filing: **29.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.06.2012 US 201213489438**

(71) Applicants:
- **SCHLUMBERGER TECHNOLOGY B.V.**
  **2514 JG The Hague (NL)**
  Designated Contracting States:
  **AL AT BG CH CY CZ DE DK GR HR HU IE IT LI LT NO PL RO SI SK TR**
- **Services Pétroliers Schlumberger**
  **75007 Paris (FR)**
  Designated Contracting States:
  **FR**
- **Schlumberger Holdings Limited**
  **Tortola 1110 (VG)**
  Designated Contracting States:
  **GB NL**
- **Prad Research And Development Limited**
  **Tortola 1110 (VG)**
  Designated Contracting States:
  **BE EE ES FI IS LU LV MC MK MT PT RS SE SM**

(72) Inventors:
- **Alford, Jefferson Y.**
  **Sugar Land, TX 77478 (US)**
- **Hawthorn, Andrew**
  **Missouri City, TX 77459 (US)**
- **Sinha, Bikash K.**
  **Cambridge, MA 02142 (US)**

(74) Representative: **Ford, Michael Frederick**
  **IP Law Dept**
  **Schlumberger Cambridge Research Limited**
  **High Cross**
  **Madingley Road**
  **Cambridge CB3 0EL (GB)**

(54) **Methods and Apparatus for Modeling Formations**

(57) Methods and apparatus for modeling formations are disclosed. An example apparatus includes a source spaced from receivers. The source is to transmit a signal and the receivers are to receive at least a portion of the signal. The example apparatus also includes a processor to process waveform data associated with the signal by generating a parameter estimate used in an inversion of Stoneley dispersion to enable a Stoneley shear slowness to substantially correspond to a slow-shear slowness when the apparatus is at least partially positioned in a horizontal wellbore of a vertical transverse isotropy formation.

FIG. 2

EP 2 672 293 A2

**Description**

BACKGROUND

Mechanical disturbances may be used to generate elastic waves in earth formations surrounding a borehole. The properties of these waves may be measured to obtain information about the formation through which the waves have propagated. Parameters such as velocity or slowness of compressional, shear and/or Stoneley waves in the formation and/or the borehole may be indicators of formation characteristics that assist in the evaluation of the location and/or producibility of hydrocarbon resources.

SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

An example method includes transmitting a signal from a source into a formation and obtaining waveform data associated with the signal received at receivers in a horizontal section of a wellbore in the formation. The method also includes determining a slow-shear slowness based on the waveform data and inverting dispersion of the waveform data to determine a first shear slowness. The method also includes comparing the slow-shear slowness and the first shear slowness to determine a value of a parameter estimate used when inverting the dispersion and determining a second shear slowness based on the waveform data and the value of the parameter. The second shear slowness is to substantially correspond to the slow-shear slowness.

Another example method includes transmitting a signal from a source into a formation and obtaining waveform data associated with the signal received at receivers in a horizontal section of a wellbore in the formation. The method also includes determining a first slowness based on the waveform data. The first slowness includes an intermittent measurement. The method also includes determining a second slowness based on the waveform data. The second slowness includes a consistent measurement based on a parameter value estimate. The method also includes comparing the first slowness and the second slowness to determine a value of the parameter and determining a vertical shear slowness in the horizontal section of the wellbore based on a redetermined second slowness. The redetermined second slowness is based on the determined value of the parameter.

An example apparatus includes a source spaced from receivers. The source is to transmit a signal and the receivers are to receive at least a portion of the signal. The example apparatus also includes a processor to process waveform data associated with the signal by generating a parameter estimate used in an inversion of Stoneley dispersion to enable a Stoneley shear slowness to substantially correspond to a slow-shear slowness when the apparatus is at least partially positioned in a horizontal wellbore of a vertical transverse isotropy formation.

FIGURES

Embodiments of systems and methods for modeling boundary layers are described with reference to the following figures. The same numbers are used throughout the figures to reference like features and components.

FIG. 1 illustrates an example system in which embodiments of the methods and apparatus for modeling formations can be implemented.
FIG. 2 illustrates an example system in which embodiments of the methods and apparatus for modeling formations can be implemented.
FIG. 3 illustrates an example system in which embodiments of the methods and apparatus for modeling formations can be implemented.
FIGS. 4 - 11 depict processing results using the examples disclosed herein.
FIG. 12 depicts an example process that can be implemented using the methods and apparatus for modeling formations.
FIG. 13 is a schematic illustration of an example processor platform that may be used and/or programmed to implement any or all of the example systems and methods described herein.

DETAILED DESCRIPTION

In the following detailed description of the embodiments, reference is made to the accompanying drawings, which form a part hereof, and within which are shown by way of illustration specific embodiments by which the examples described herein may be practiced. It is to be understood that other embodiments may be utilized and structural changes may be made without departing from the scope of the disclosure.

The examples disclosed herein relate to methods and apparatus that enable optimal design completion for shale-gas and/or hydrocarbon production in horizontal wellbores while drilling. More specifically, the examples disclosed enable anisotropy characterization of vertical transverse isotropy (VTI) shale-gas formations and/or vertical transverse isotropy formations (e.g., shale containing oil) using monopole sonic data. Anisotropy characterization assists in identifying weaker areas of the formation to be fractured during production.

To estimate formation shear anisotropy using the disclosed examples, wideband monopole waveforms may be recorded at a receiver array in a horizontal wellbore in a VTI shale-gas formation and/or an unconventional resource reservoir. The recorded waveforms may be associated with the lowest-order axi-symmetric Stoneley mode, the fast quadrupole mode and the slow quadrupole mode. The fast quadrupole mode may be the first to arrive at the receiver array, followed by the second quadrupole mode and the high amplitude Stoneley mode, respectively.

In a horizontal wellbore, the recorded waveforms may be processed using a slowness time-coherence algorithm to determine compressional slowness, fast-shear slowness and slow-shear slowness. Specifically, the fast-shear slowness and slow-shear slowness may be processed to determine the shear moduli $C_{66}$ and $C_{55}$, respectively and, using an estimate of the borehole fluid compressional slowness, the Stoneley dispersion may be inverted over a selected bandwidth to determine the shear modulus $C_{44}$. In some horizontal wellbore examples, the slow-shear modulus $C_{44}$ may be obtained from a 2-parameter inversion of the Stoneley dispersion to estimate the borehole fluid compressional slowness (DTmud) together with the shear modulus $C_{55}$. In some examples, the fast-shear modulus $C_{66}$ obtained from refracted headwaves may be more accurate than the shear modulus $C_{55}$ because the fast refracted headwave $C_{66}$ is more strongly excited.

Processing of sonic data from a horizontal wellbore may yield the shear modulus $C_{66}$ that may be used to determine the horizontal shear slowness and $C_{55}$ and $C_{44}$ may be used to determine the vertical shear slownesses in a VTI shale-gas formation. Both $C_{55}$ and $C_{44}$ are used to determine the vertical shear slowness because $C_{55}$ (e.g., a direct measured head wave) is a non-continuous and/or inconsistent measurement and $C_{44}$ is a continuous and/or consistent measurement, but is affected and/or offset by the borehole fluid compressional slowness estimate used in the Stoneley dispersion inversion. Thus, by comparing $C_{55}$ and $C_{44}$ and using a cost function to, for example, modify the borehole fluid compressional slowness and/or other parameters such that $C_{44}$ substantially equals $C_{55}$, a continuous measurement of the vertical shear slowness may be determined for a horizontal wellbore in a VTI shale-gas formation. In some examples, Poisson's ratio may be determined and/or a three-dimensional (3-D) model may be generated using the measured compressional slowness, the measured horizontal shear slowness, the determined vertical shear slowness and the density of the formation. In some examples, a Thomsen parameter, $\gamma$, may be determined based on the shear moduli $C_{44}$ and $C_{66}$.

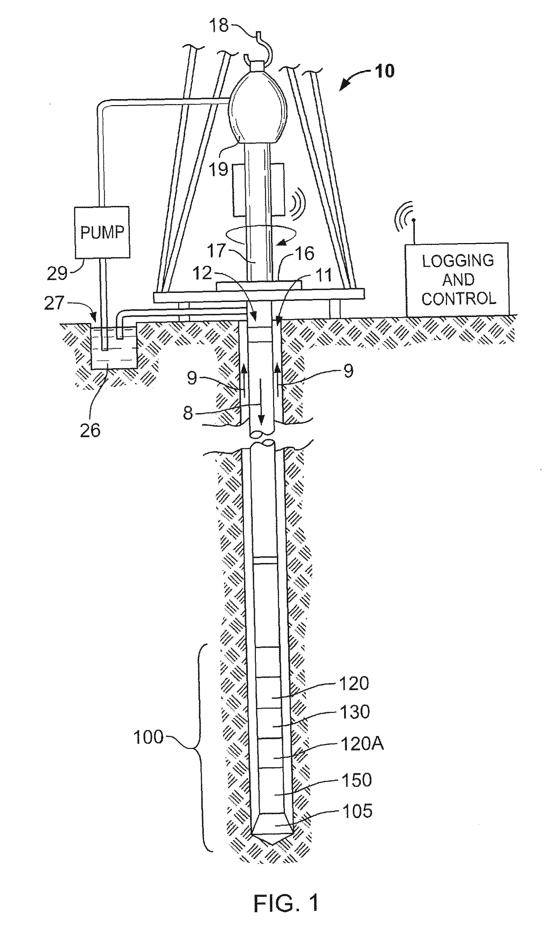

FIG. 1 illustrates a wellsite system in which the examples disclosed herein can be employed. The wellsite can be onshore or offshore. In this example system, a borehole 11 is formed in subsurface formations by rotary drilling. However, the examples described herein can also use directional drilling, as will be described hereinafter.

A drill string 12 is suspended within the borehole 11 and has a bottom hole assembly 100 that includes a drill bit 105 at its lower end. The surface system includes a platform and derrick assembly 10 positioned over the borehole 11. The assembly 10 includes a rotary table 16, a kelly 17, a hook 18 and a rotary swivel 19. The drill string 12 is rotated by the rotary table 16. The rotatory table 16 may be energized by a device or system not shown. The rotary table 16 may engage the kelly 17 at the upper end of the drill string 12. The drill string 12 is suspended from the hook 18, which is attached to a traveling block (also not shown). Additionally, the drill string 12 is positioned through the kelly 17 and the rotary swivel 19, which permits rotation of the drill string 12 relative to the hook 18. Additionally or alternatively, a top drive system may be used to impart rotation to the drill string 12.

In this example, the surface system further includes drilling fluid or mud 26 stored in a pit 27 formed at the well site. A pump 29 delivers the drilling fluid 26 to the interior of the drill string 12 via a port in the swivel 19, causing the drilling fluid 26 to flow downwardly through the drill string 12 as indicated by the directional arrow 8. The drilling fluid 26 exits the drill string 12 via ports in the drill bit 105, and then circulates upwardly through the annulus region between the outside of the drill string 12 and the wall of the borehole 11, as indicated by the directional arrows 9. In this manner, the drilling fluid 26 lubricates the drill bit 105 and carries formation cuttings up to the surface as it is returned to the pit 27 for recirculation.

The bottom hole assembly 100 of the example illustrated in FIG. 1 includes a logging-while-drilling (LWD) module 120, a measuring-while-drilling (MWD) module 130, a roto-steerable system and motor 150, and the drill bit 105.

The LWD module 120 may be housed in a special type of drill collar and can contain one or more logging tools. In some examples, the bottom hole assembly 100 may include additional LWD and/or MWD modules. As such, references throughout this description to reference numeral 120 may additionally or alternatively include 120A. The LWD module 120 may include capabilities for measuring, processing, and storing information, as well as for communicating with the surface equipment. Additionally or alternatively, the LWD module 120 includes a sonic measuring device.

The MWD module 130 may also be housed in a drill collar and can contain one or more devices for measuring characteristics of the drill string 12 and/or the drill bit 105. The MWD tool 130 further may include an apparatus (not shown) for generating electrical power for at least portions of the bottom hole assembly 100. The apparatus for generating electrical power may include a mud turbine generator powered by the flow of the drilling fluid. However, other power and/or battery systems may be employed. In this example, the MWD module 130 includes one or more of the following types of measuring devices: a weight-on-bit measuring device, a torque measuring device, a vibration measuring device, a shock measuring device, a stick slip measuring device, a direction measuring device and/or an inclination measuring device.

Although the components of FIG. 1 are shown and described as being implemented in a particular conveyance type, the examples disclosed herein are not limited to a particular conveyance type but, instead, may be implemented in connection with different conveyance types including, for example, coiled tubing, wireline wired drillpipe and/or any other conveyance types known in the industry.

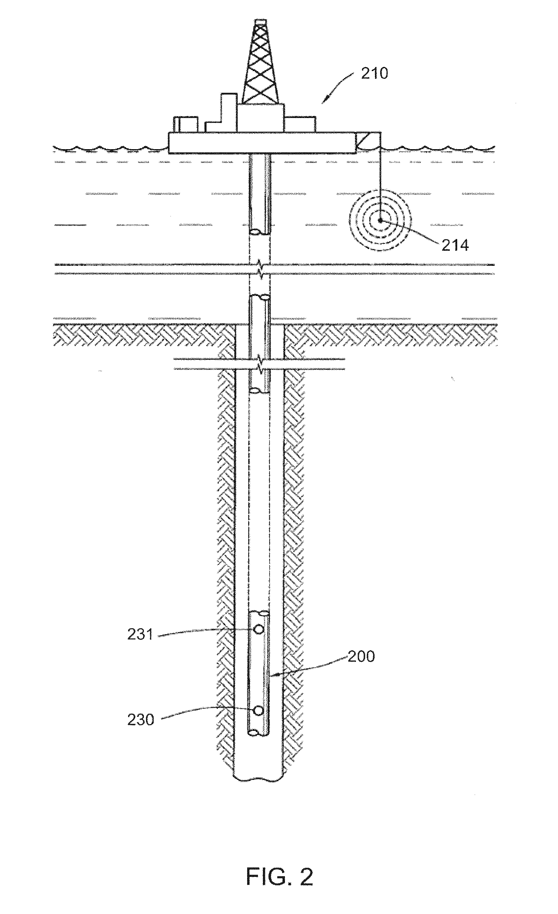

FIG. 2 illustrates a sonic logging-while-drilling tool that can be used to implement the LWD tool 120 or may be a part of an LWD tool suite 120A of the type described in U.S. Patent No. 6,308,137, which is hereby incorporated herein by reference in its entirety. An offshore rig 210 having a sonic transmitting source or array 214 may be deployed near the surface of the water. Additionally or alternatively, any other type of uphole or downhole source or transmitter may be provided to transmit sonic signals. In some examples, an uphole processor 213 controls the firing of the transmitter 214.

Uphole equipment can also include acoustic receivers (not shown) and a recorder (not shown) for capturing reference signals near the source of the signals (e.g., the transmitter 204). The uphole equipment may also include telemetry equipment (not shown) for receiving MWD signals from the downhole equipment. The telemetry equipment and the recorder may be coupled to a processor (not shown) so that recordings may be synchronized using uphole and downhole clocks. A downhole LWD module 200 includes at least acoustic receivers 230 and 231, which are coupled to a signal processor so that recordings may be made of signals detected by the receivers in synchronization with the firing of the signal source.

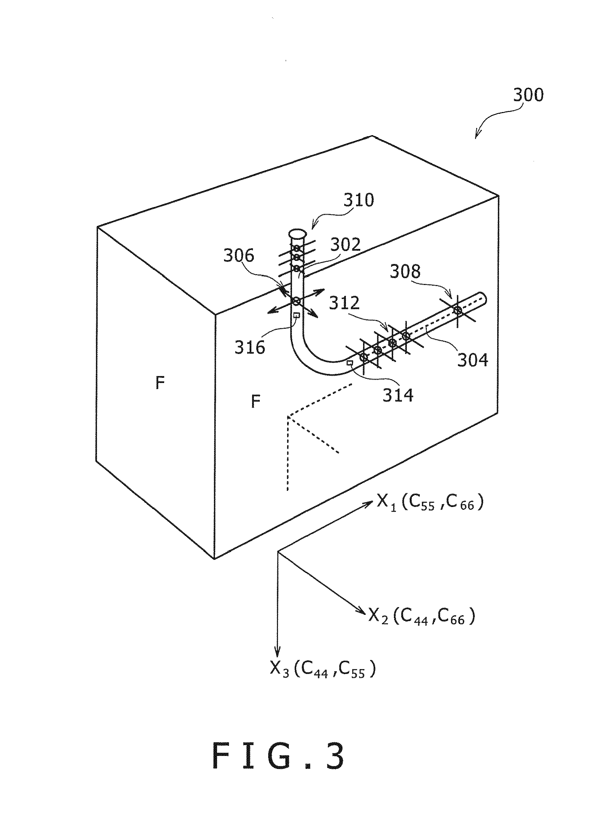

FIG. 3 illustrates a downhole tool 300 positioned in a vertical section 302 and a horizontal section 304 of a borehole in an orthorhombic formation F. The vertical section 302 is substantially parallel to the X3-axis and the horizontal section 304 is substantially parallel to the X1-axis.

The downhole tool 300 includes a plurality of sources (e.g., dipole sources) 306, 308, a plurality of receivers (e.g., dipole receivers, receiver arrays, an array of hydrophones) 310, 312 and one or more processers 314, 316. While the sources 306, 308 and the receivers 310, 312 are depicted as dipole sources and dipole receivers, the sources 306, 308 and/or the receivers 310, 312 may be any other type of source and/or receiver. For example, the sources 306, 308 may be monopole sources and the receivers 310, 312 may be monopole receivers.

In operation, the sources 306, 308 transmit signals and/or waves that are received by one or more of the receivers 310, 312. The received signals may be recorded and/or logged to generate associated wavefront data. The wavefront data may be processed by the processors 314, 316 to determine slownesses of arrivals as a function of depth (z), for example. The processors 314 and/or 316 may be associated with a sonic tool and/or logging device such as, the Sonic Scanner (a mark of Schlumberger or the assignee hereof) and/or the SonicScope (a mark of Schlumberger or the assignee hereof). The slownesses may be include compressional slowness (DTc), shear slowness (DTs) and/or Stoneley slowness (DTsh). Additionally and/or alternatively, the processors 314 and/or 316 may be used to obtain monopole and/or quadrupole waveform data. In some examples, the processors 314 and/or 316 may process the monopole waveforms using a slowness-time-coherence

(STC) algorithm to determine compressional and shear slownesses in fast formations. In some examples, the processors 314 and/or 316 may process the quadrupole waveforms to determine shear slowness in fast and slow formations.

To isolate non-dispersive and dispersive arrivals from the waveform data and/or wavetrain, the processors 314 and/or 316 may process recorded waveforms from the receivers 310, 312 using a modified matrix pencil algorithm. The processors 314 and/or 316 may solve a boundary value problem to determine slowness dispersions in a fluid-filled borehole. The fluid filled borehole may or may not include a downhole tool. To solve the boundary value problem, the processors 314, 316 may use inputs such as geometric and material parameters of the equivalent tool structure and/or borehole fluid and/or elastic properties of the formation. Some of these inputs may include equivalent drill collar material and/or geometric parameters, borehole fluid compressional velocity and/or mass density, and/or formation mass density and/or anisotropic elastic constants.

In the vertical section 302, cross-dipole sonic data may be used by the processors 314, 316 to determine the shear moduli $C_{44}$ and $C_{55}$ in the two orthogonal planes (X2-X3 plane and X1-X3 plane) containing the wellbore X3-axis. Additionally, the processors 314, 316 may invert the Stoneley data using an accurate estimate of borehole fluid compressional slowness to determine the shear modulus $C_{66}$ in the borehole cross-sectional plane (X1-X2 plane). When inverting the Stoneley data to determine the shear modulus $C_{66}$ in the vertical section 302, tool effects and any possible near-wellbore alteration may be accounted for.

In the horizontal section 304, cross-dipole sonic data may be used by the processors 314, 316 to determine

the shear moduli $C_{55}$ and $C_{66}$ in the two orthogonal X1-X3 and X1-X2 planes, respectively and the Stoneley data may be inverted to determine the shear modulus $C_{44}$ in the borehole cross-sectional plane (X2-X3 plane). As discussed above, in a VTI shale-gas formation, $C_{55}$ equals $C_{44}$. In a Transverse Isotropic (TI) formation having a symmetry axis parallel to the X3-axis, $C_{66}$ is greater than $C_{44}$ and $C_{44}$ equals $C_{55}$.

In operation, the processors 314, 316 may process monopole sonic data from the horizontal section 304 of a fast shale-gas formation (e.g., VTI formation, orthorhombic formation) F and identify two distinct arrivals having shear slownesses corresponding to the shear moduli $C_{66}$ and $C_{55}$. In some examples, an equivalent tool model may be used to describe the LWD sonic tool effects on the monopole Stoneley dispersion. Using an estimate of borehole compressional slowness, the processors 314, 316 may invert the Stoneley dispersion to determine the shear modulus $C_{44}$. In the VTI formation, the shear modulus $C_{44}$ corresponds to, fits and/or equals the shear modulus $C_{55}$. If the estimated borehole compressional slowness is substantially accurate, the shear modulus $C_{44}$ determined from the Stoneley inversion is substantially equal to the shear moduli $C_{55}$ determined from the direct monopole shear arrival, for example.

In some examples, $C_{44}$ may be estimated using Equation 1. Equation 1 is a cost function that minimizes the difference between the measured and modeled Stoneley dispersions over a particular bandwidth where the Stoneley data is primarily sensitive to far-field formation properties. In some examples, the value of $C_{44}$ that minimizes the cost function $\varepsilon$ is the estimated far-field formation shear modulus. Referring to Equation 1, $S_i^{data}$ and $S_i^{model}$ corresponds to the measured and modeled predicted Stoneley wave slownesses at different frequencies and the index I= 1, 2, 3, ...N corresponds to the slowness or velocity at the $i^{th}$ frequency.

$$\varepsilon = \frac{\sum_{i=1}^{N} \left| S_i^{data} - S_i^{model} \right|}{\sum_{i=1}^{N} \left| S_i^{model} \right|}$$

Equation 1:

In the vertical section 302, the processers 314, 316 may use compressional velocity to determine the compressional modulus $C_{33}$. Additionally, the processors 314, 316 may determine the shear moduli $C_{44}$ and $C_{55}$ in the two orthogonal axial planes (X2-X3 plane and X1-X3 plane) using the cross-dipole sonic data and the shear modulus $C_{66}$ in the borehole cross-sectional plane (X1-X2 plane) using the inverted Stoneley data.

In some examples, the compressional velocity is defined as $C_{33} = \rho V_{33}^2$, the slow-shear velocity is defined as $C_{44} = \rho V_{32}^2$, the fast-shear velocity is defined as $C_{55} = \rho V_{31}^2$, and the Stonley velocity is defined as $C_{66} = \rho V_{12}^2$. In some examples, the first index of velocity, $V_{32}$, implies that the propagation direction is parallel to the X3-direction and the second index on velocity, $V_{32}$, implies that the wave polarization direction is parallel to the X2-direction. Thus, $V_{32}$ corresponds to a shear wave velocity with propagation parallel to the X3-axis and polarization parallel to the X2-direction.

In the horizontal section 304, the processers 314, 316 may use compressional velocity to determine the compressional modulus $C_{11}$. Additionally, the processors 314, 316 may determine the shear moduli $C_{55}$ and $C_{66}$ in the two orthogonal X1-X3 and X1-X2 axial planes, respectively using the cross-dipole sonic data and the shear modulus $C_{44}$ in the borehole cross-sectional plane (X2-X3 plane) using the inverted Stoneley data.

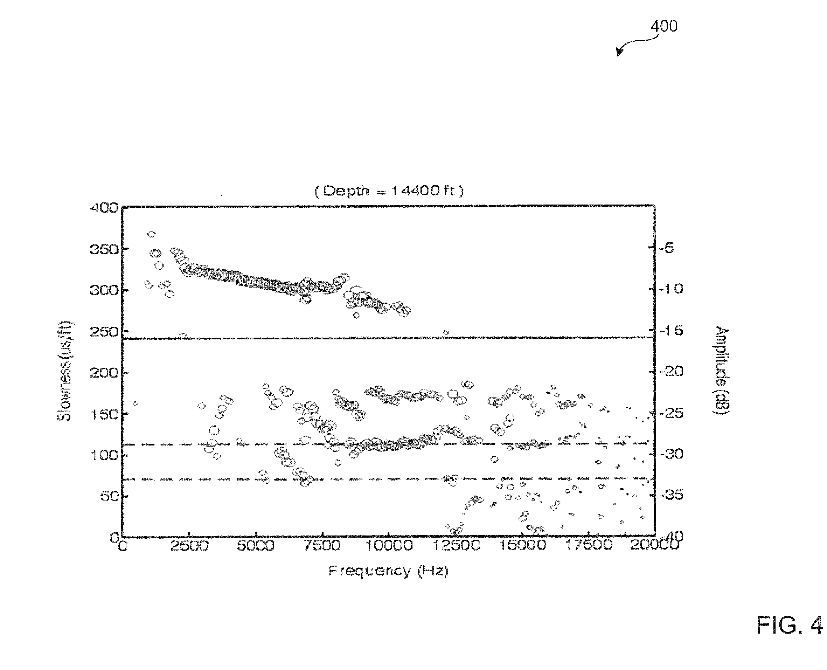

FIG. 4 is an example chart 400 that depicts dispersions of dispersive and non-dispersive arrivals obtained from an array of monopole waveforms in a horizontal wellbore in a VTI shale-gas formation at a first depth (A).

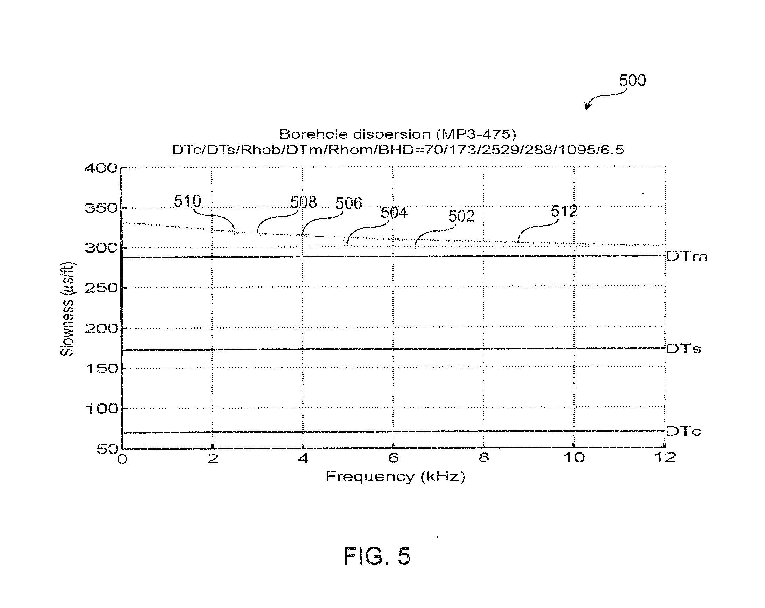

FIG. 5 is an example chart 500 that depicts a comparison of measured Stoneley dispersion 502 - 510 and predicted Stoneley dispersion 512 obtained for an equivalent isotropic and radially homogeneous formation using an inverted shear slowness of 173 μs/ft and a borehore fluid (e.g., drilling fluid) compressional slowness of 288 μs/ft. In this example, a drilling fluid density of 1.095 g/cc was assumed and an equivalent tool model with calibrated parameters for a VTI gas-shale formation was used.

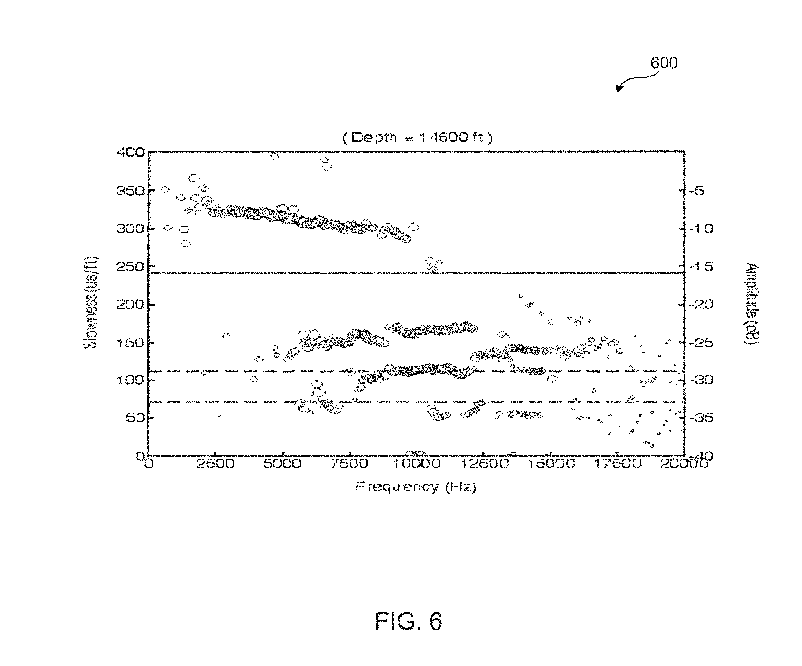

FIG. 6 is an example chart 600 that depicts dispersions of dispersive and non-dispersive arrivals obtained from an array of monopole waveforms in a horizontal wellbore in a VTI shale-gas formation at a second depth (B).

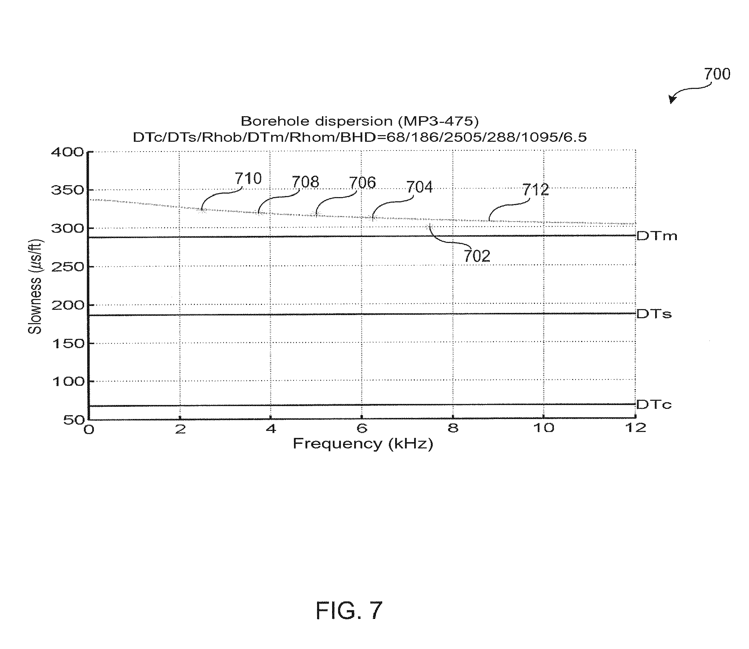

FIG. 7 is an example chart 700 that shows an array of recorded waveforms obtained from a 3D finite-difference, time-domain (FDTM) formulation that can process data from anisotropic formations. The waveforms may be processed using a modified matrix pencil algorithm. The chart 700 depicts a comparison of measured Stoneley dispersion 702 - 710 and predicted Stoneley dispersion 712 obtained for an equivalent isotropic and radially homogeneous formation using an inverted shear slowness of 186 $\mu$s/ft and a borehore fluid (e.g., drilling fluid) compressional slowness of 288 $\mu$s/ft. In this example, a drilling fluid density of 1.095 g/cc was assumed and  an equivalent tool model with calibrated parameters for a VTI gas-shale formation was used.

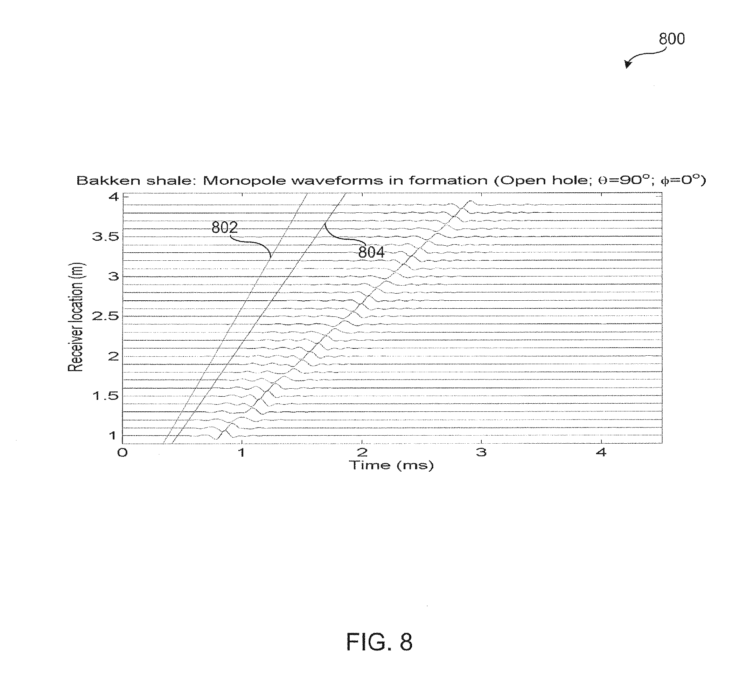

FIG. 8 is an example chart 800 that depicts synthetic waveforms recorded at an array of receivers in a horizontal fluid-filled borehole in a transversely-isotropic (TI) Bakken shale formation with a TI-symmetry axis parallel to the vertical direction. Reference number 802 corresponds to fast-shear moveout and referenced number 804 corresponds to slow-shear moveout.

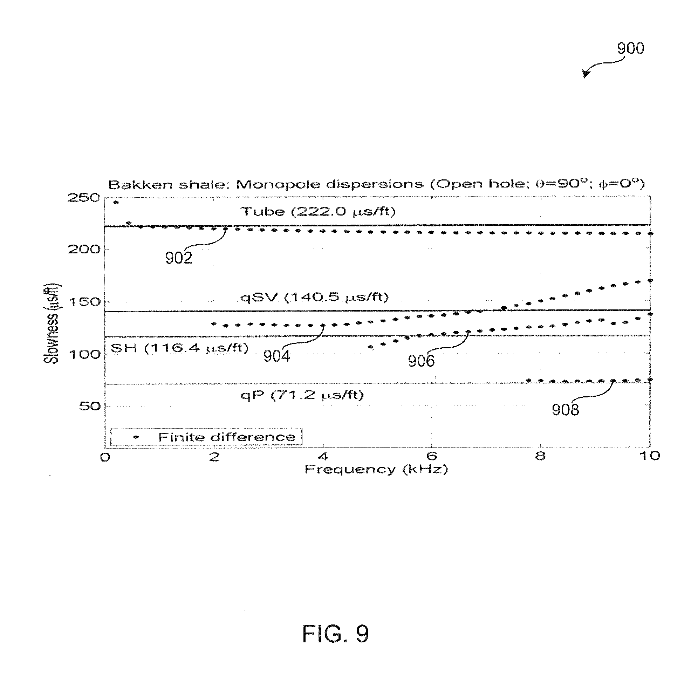

FIG. 9 is an example chart 900 that depicts dispersive arrivals obtained from an array of monopole waveforms in a horizontal wellbore in a TI Bakkens shale formation with a vertical TI-symmetry axis. The chart 900 shows four coherent arrivals 902 - 908 in the recorded waveforms without a tool structure in the borehole. The dispersive and Stoneley dispersion 902 approaches the tube wave slowness at low frequencies. The non-dispersive compressional headwave 908 is the fastest coherent arrival. Both the fast and slow quadrupole modal dispersive arrivals 904, 906 are obtained from processing the recorded waveforms.

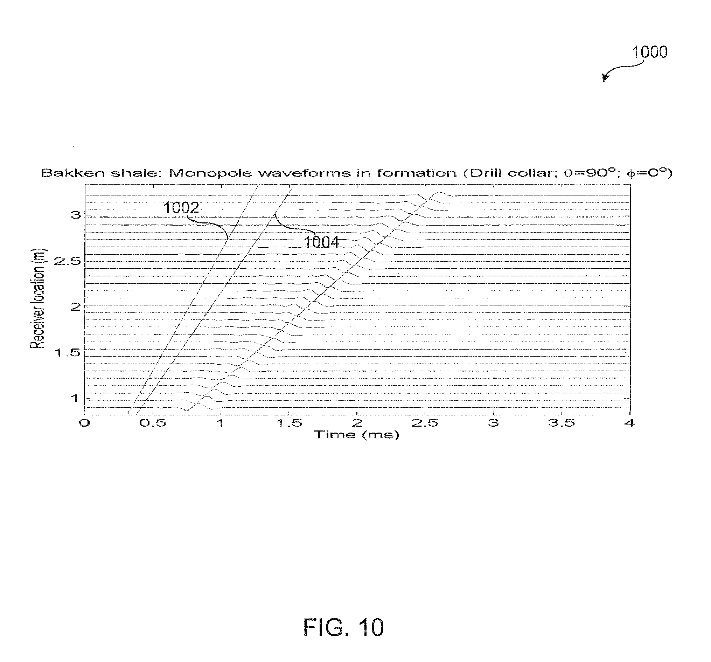

FIG. 10 depicts an array of waveforms 1000 generated by a monopole source in a horizontal wellbore in a VTI Bakken shale formation in which a drill collar is positioned. The waveforms 1000 were recorded at an array of receivers in a horizontal fluid-filled borehole in a transversely-isotropic (TI) Bakken shale formation with a TI-symmetry axis parallel to the vertical direction. Reference number 1002 corresponds to fast-shear moveout and reference number 1004 corresponds to slow-shear moveout.

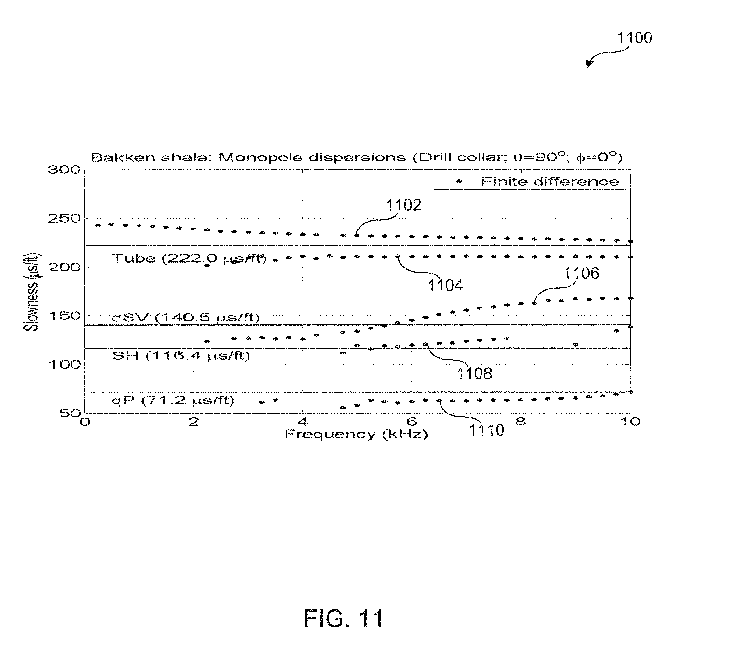

FIG. 11 depicts processing results 1100 of the waveforms of FIG. 10. The processing results 1100 identify five different coherent arrivals 1102 - 1110. Reference number 1102 corresponds to the lowest-order, axi-symmetric Stoneley mode. Reference numbers 1104 and 1106 correspond to the fast and slow quadrupole modes, respectively. Reference number 1108 corresponds to the fast tube mode and reference number 1110 corresponds to the drill collar extension mode. In some examples, the fast tube mode 1108 and the drill collar extension mode may not be observed in field data because of various tool components inside the drill collar including attenuating grooves designed to suppress the tool extensional mode propagating the drill collar.

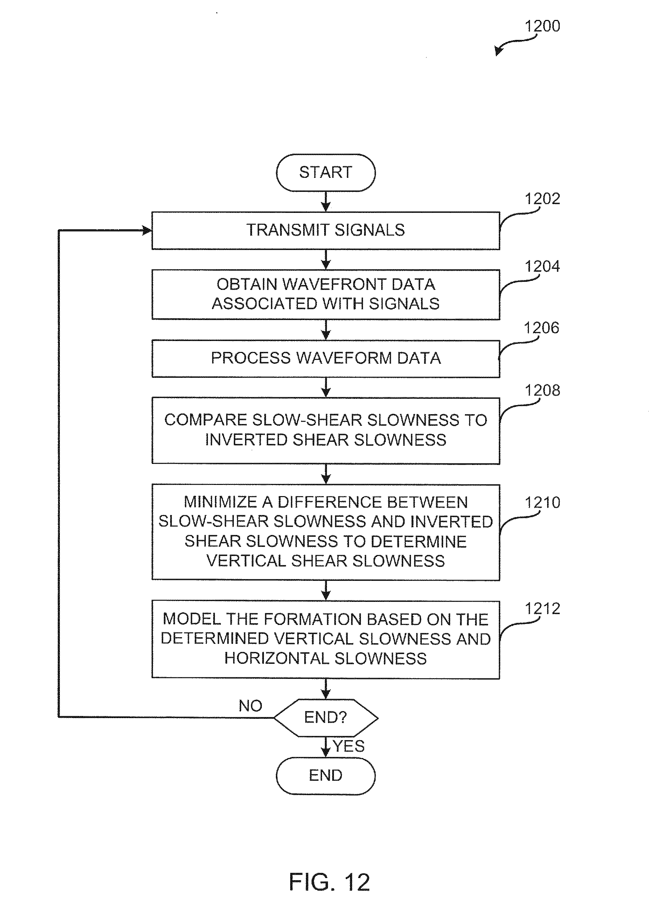

FIG. 12 depicts an example flow diagram representative of processes that may be implemented using, for example, computer readable and executable instructions that may be used to model formations. The example processes of FIG. 12 may be performed using a processor, a controller and/or any other suitable processing device. For example, the example processes of FIG. 12 may be implemented using coded instructions (e.g., computer readable instructions) stored on a tangible computer readable medium such as a flash memory, a read-only memory (ROM), and/or a random-access memory (RAM). As used herein, the term tangible computer readable medium is expressly defined to include any type of computer readable storage and to exclude propagating signals. Additionally or alternatively, the example processes of FIG. 12 may be implemented using coded instructions (e.g., computer readable instructions) stored on a non-transitory computer readable medium such as a flash memory, a read-only memory (ROM), a random-access memory (RAM), a cache, or any other storage media in which information is stored for any duration (e.g., for extended time periods, permanently, brief instances, for temporarily buffering, and/or for caching of the information). As used herein, the term non-transitory computer readable medium is expressly defined to include any type of computer readable medium and to exclude propagating signals.

Alternatively, some or all of the example operations of FIG. 12 may be implemented using any combination(s) of application specific integrated circuit(s) (ASIC(s)), programmable logic device(s) (PLD(s)), field programmable logic device(s) (FPLD(s)), discrete logic, hardware, firmware, etc. Also, some or all of the example processes of FIG. 12 may be implemented manually or as any combination(s) of any of the foregoing techniques, for example, any combination of firmware, software, discrete logic and/or hardware. Further, although the example processes of FIG. 12 are described with reference to the flow diagram of FIG. 12, other methods of implementing the processes of FIG. 12 may be employed. For example, the order of execution of the blocks may be changed, and/or some of the blocks described may be changed, eliminated, sub-divided, or combined. Additionally, any or all of the example processes of FIG. 12 may be performed sequentially and/or in parallel by, for example, separate processing threads, processors, devices, discrete logic, circuits, etc.

The example process 1200 of FIG. 12 may begin by transmitting a signal from one or more transmitters and/or sources (block 1202) and receiving the signals at one or more receivers spaced from the transmitters. The receivers may be positioned in a horizontal section of a wellbore in a VTI  shale-gas formation. In some examples, the source may be one or more monopole sources. However, any other type of source may be used.

The received signals may be recorded and/or logged to generate wavefront and/or waveform data associated with the signals (block 1204). The waveform data may be monopole waveform data. One or more processors may process the waveform data (block 1206) to determine a first and/or slow-shear slowness (block 1208), a second and/or Stoneley-shear slowness (block 1210) and/or a third and/or fast-shear slowness. The Stoneley-shear slowness may be determined by inverting the Stoneley dispersion.

In a horizontal section of a wellbore in a VTI shale-gas formation, the slow-shear slowness substantially corresponds to the Stoneley shear slowness. However, the slow-shear slowness may be an intermittent measurement and the Stoneley-shear slowness may be a consistent measurement which is dependent on and/or effected by a parameter and/or borehole fluid compressional slowness estimate used when inverting the Stoneley dispersion.

The processors may compare the slow-shear slowness and the Stoneley-shear slowness to optimize the parameter estimate (block 1212) and determine a second Stoneley shear slowness using the optimized parameter estimate (block 1214). The second Stoneley shear slowness is to substantially correspond to the slow-shear slowness. Optimizing the parameter estimate may include minimizing a difference between the Stoneley shear slowness and the slow-shear slowness.

In some examples, the slow-shear slowness, the second Stoneley shear slowness and/or a fast-shear slowness may be used by the processors to determine one or more parameters (block 1216). For example, the second Stoneley-shear slowness and/or the slow-shear slowness may be used by the processors to determine a vertical shear slowness in the horizontal wellbore section of the VTI shale-gas formation. Additionally or alternatively, the fast-shear slowness and one or more of the slow-shear slowness and/or the second Stoneley shear slowness may be used to determine a Thomsen parameter. Using the vertical shear slowness and the horizontal shear slowness, the processors may generate a model of the formation in which the horizontal section of the wellbore is positioned (block 1218).

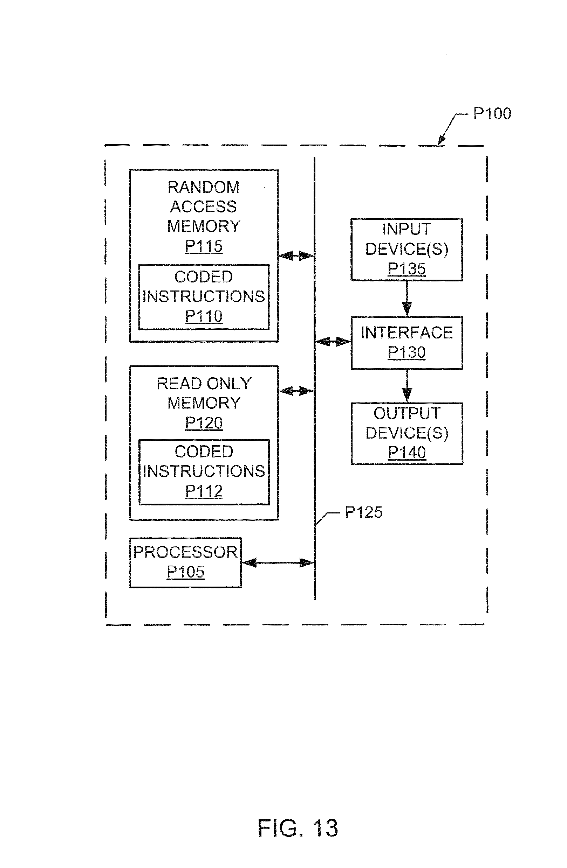

FIG. 13 is a schematic diagram of an example processor platform P100 that may be used and/or programmed to implement to implement the logging and control computer and/or any of the examples described herein. For example, the processor platform P100 can be implemented by one or more general purpose processors, processor cores, microcontrollers, etc.

The processor platform P100 of the example of FIG. 13 includes at least one general purpose programmable processor P105. The processor P105 executes coded instructions P110 and/or P112 present in main memory of the processor P105 (e.g., within a RAM P115 and/or a ROM P120). The processor P105 may be any type of processing unit, such as a processor core, a processor and/or a microcontroller. The processor P105 may execute, among other things, the example methods and apparatus described herein.

The processor P105 is in communication with the main memory (including a ROM P120 and/or the RAM P115) via a bus P125. The RAM P115 may be implemented by dynamic random-access memory (DRAM), synchronous dynamic random-access memory (SDRAM), and/or any other type of RAM device, and ROM may be implemented by flash memory and/or any other desired type of memory device. Access to the memory P115 and the memory P120 may be controlled by a memory controller (not shown).

The processor platform P100 also includes an interface circuit P130. The interface circuit P130 may be implemented by any type of interface standard, such as an external memory interface, serial port, general purpose input/output, etc. One or more input devices P135 and one or more output devices P140 are connected to the interface circuit P130.

Sonic logging may be performed in a horizontal well of a VTI shale-gas formation using one or more sources (e.g., a monopole transmitter, a quadrupole transmitter, etc.). Dispersive and non-dispersive arrivals of the recorded waveforms may be isolated by processing recorded waveforms using a modified matrix pencil algorithm. If a monopole transmitter is used in a VTI shale-gas formation, multiple dispersive arrivals may be analyzed to estimate formation anisotropy.

In operation, a monopole source may transmit signals that may be received as monopole dual shear arrivals (fast and slow quadrupole dispersions) in a horizontal wellbore of a VTI shale-gas reservoir. The quadrupole dispersions may be processed and/or inverted using a slowness-time-coherence algorithm to determine formation shear slowness corresponding to the shear moduli $C_{66}$ and $C_{55}$. In some examples, the fast-shear modulus $C_{66}$ may be more accurate than the shear modulus $C_{55}$ because the shear modulus $C_{66}$ is more strongly excited.

To determine the shear modulus $C_{44}$ in a horizontal wellbore of a VTI shale-gas reservoir, the fast-shear modulus $C_{66}$ may be used in a 2-parameter inversion to estimate the borehole fluid compressional slowness (DTmud). Using the borehole fluid compressional slowness estimate, the measured Stoneley dispersion may be inverted to determine the shear modulus $C_{44}$. In a horizontal wellbore of a VTI formation, the shear modulus $C_{44}$ corresponds to the shear modulus $C_{55}$. However, the estimated shear modulus $C_{44}$ may be affected by the parameters, such as the borehole fluid compressional slowness (DTmud), used in the Stoneley inversion. By comparing the shear moduli $C_{44}$ and $C_{55}$ and/or using a cost function, the parameters used in the Stoneley inversion may be modified such that the shear modulus $C_{44}$ corresponds to the shear modulus $C_{55}$. In some examples, the shear moduli $C_{66}$ and $C_{44}$ may be directly used to determine one of the Thomsen parameters, $\gamma$. Such a technique does not require the use of a complex inversion algorithm that is used when inverting the Stoneley data. In some examples, the Thomsen parameters, $\gamma$, may be determined based on a difference of the shear moduli $C_{66}$ and $C_{55}$.

Although only a few example embodiments have been described in detail above, those skilled in the art will readily appreciate that many modifications are possible in the example embodiments without materially departing from the methods and apparatus for modeling formations. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words 'means for' together with an associated function.

**Claims**

1. A method, comprising:

    transmitting a signal from a source into a formation;
    obtaining waveform data associated with the signal received at receivers in a horizontal section of a wellbore in the formation;
    determining a slow-shear slowness based on the waveform data;
    inverting dispersion of the waveform data to determine a first shear slowness;
    comparing the slow-shear slowness and the first shear slowness to determine a value of a parameter estimate used when inverting the dispersion; and
    determining a second shear slowness based on the waveform data and the value of the parameter, the second shear slowness to substantially correspond to the slow-shear slowness.

2. The method of claim 1, further comprising determining a vertical shear slowness based on the second shear slowness, and generating a model of the formation in which the horizontal section of the wellbore is positioned based on the vertical shear slowness and a horizontal shear slowness, the horizontal shear slowness determined based on the waveform data.

3. The method of claim 1, further comprising determining a Thomsen parameter based on a fast-shear slowness and at least one of the slow-shear slowness or the second shear slowness, the fast-shear slowness determined based on the waveform data.

4. The method of claim 1, wherein the parameter comprises a borehole fluid compressional slowness.

5. The method of claim 1, wherein determining the value of the parameter comprises minimizing a difference between the first shear slowness and the slow-shear slowness.

6. The method of claim 1, wherein the slow-shear slowness comprises an intermittent measurement.

7. The method of claim 1, wherein the first shear slowness comprising a Stoneley shear slowness that is a consistent measurement which is dependent on the parameter.

8. A method, comprising:

    transmitting a signal from a source into a formation;
    obtaining waveform data associated with the signal received at receivers in a horizontal section of a wellbore in the formation;
    determining a first slowness based on the waveform data, wherein the first slowness comprises an intermittent measurement;
    determining a second slowness based on the waveform data, the second slowness comprising a consistent measurement based on a parameter value estimate;
    comparing the first slowness and the second slowness to determine a value of the parameter; and
    determining a vertical shear slowness in the horizontal section of the wellbore based on a redetermined second slowness, the redetermined second slowness based on the determined value of the parameter.

9. The method of claim 8, wherein the first slowness comprises a slow-shear slowness, and the second slowness comprises a Stoneley slowness determined by inverting Stoneley dispersion of the waveform data.

10. The method of claim 8, wherein the waveforms comprise monopole waveforms.

11. The method of claim 8, further comprising determining a Thomsen parameter based on a fast-shear slowness and at least one of the first slowness or the redetermined second slowness, the first slowness comprising a slow-shear slowness and the second slowness comprising a Stoneley slowness; wherein the Stoneley slowness is determined by inverting Stoneley dispersion of the waveform data.

12. An apparatus, comprising:

one or more sources spaced from receivers, the one or more sources to transmit one or more signals and the receivers to receive at least a portion of the one or more signals; and
a processor to process waveform data associated with the one or more signals by generating a parameter estimate used in an inversion of Stoneley dispersion to enable a Stoneley shear slowness to substantially correspond to a slow-shear slowness when the apparatus is at least partially positioned in a horizontal wellbore of a vertical transverse isotropy formation.

13. The apparatus of claim 12, wherein the parameter comprises a borehole fluid compressional slowness.

14. The apparatus of claim 12, wherein the processor is to further determine a Thomsen parameter based on a fast-shear slowness and at least one of the slow-shear slowness or the Stoneley shear slowness.

15. The apparatus of claim 12, wherein the one or more sources comprise one or more monopole sources.

FIG. 1

FIG. 2

FIG.3

FIG. 4

Borehole dispersion (MP3-475)
DTc/DTs/Rhob/DTm/Rhom/BHD=70/173/2529/288/1095/6.5

FIG. 5

EP 2 672 293 A2

FIG. 6

FIG. 7

Bakken shale: Monopole waveforms in formation (Open hole; θ=90°; φ=0°)

FIG. 8

EP 2 672 293 A2

FIG. 9

EP 2 672 293 A2

FIG. 10

Bakken shale: Monopole dispersions (Drill collar; $\theta=90°$; $\phi=0°$)

FIG. 11

1200

START

TRANSMIT SIGNALS — 1202

OBTAIN WAVEFRONT DATA
ASSOCIATED WITH SIGNALS — 1204

PROCESS WAVEFORM DATA — 1206

COMPARE SLOW-SHEAR SLOWNESS TO
INVERTED SHEAR SLOWNESS — 1208

MINIMIZE A DIFFERENCE BETWEEN
SLOW-SHEAR SLOWNESS AND INVERTED
SHEAR SLOWNESS TO DETERMINE
VERTICAL SHEAR SLOWNESS — 1210

MODEL THE FORMATION BASED ON THE
DETERMINED VERTICAL SLOWNESS AND
HORIZONTAL SLOWNESS — 1212

NO          END?

YES

END

FIG. 12

P100

RANDOM
ACCESS
MEMORY
P115

CODED
INSTRUCTIONS
P110

READ ONLY
MEMORY
P120

CODED
INSTRUCTIONS
P112

PROCESSOR
P105

P125

INPUT
DEVICE(S)
P135

INTERFACE
P130

OUTPUT
DEVICE(S)
P140

FIG. 13

**EP 2 672 293 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6308137 B